Europäisches Patentamt

European Patent Office

Office européen des brevets

(19)

(11) Veröffentlichungsnummer : **0 100 029**
**B1**

(12) **EUROPÄISCHE PATENTSCHRIFT**

(45) Veröffentlichungstag der Patentschrift :
10.09.86

(21) Anmeldenummer : 83106897.8

(22) Anmeldetag : 14.07.83

(51) Int. Cl.⁴ : **B 32 B 27/00, F 16 L 58/10,**
**F 16 L 55/16**

(54) Beschichteter Verbundwerkstoff, Verfahren zu seiner Herstellung und seine Verwendung zum Auskleiden von Durchlässen.

(30) Priorität : 24.07.82 DE 3227679

(43) Veröffentlichungstag der Anmeldung :
08.02.84 Patentblatt 84/06

(45) Bekanntmachung des Hinweises auf die Patenterteilung : 10.09.86 Patentblatt 86/37

(84) Benannte Vertragsstaaten :
BE CH DE FR GB IT LI NL

(56) Entgegenhaltungen :
EP-A- 0 052 279
DE-B- 1 931 590
DE-C- 2 362 784

(73) Patentinhaber : BAYER AG
Konzernverwaltung RP Patentabteilung
D-5090 Leverkusen 1 Bayerwerk (DE)

GRABOPLAST Pamutszövö és Mübörgyár
Fehérvari ut 16/B
H-9002 Györ (HU)

(72) Erfinder : Gottwald, Lászlò
Zombor u. 13
H-9023 Gyoer (HU)
Erfinder : Wlasitsch, Gyula
Mester u. 28
H-9023 Gyoer (HU)
Erfinder : Schröer, Walter, Dr.
Nicolai-Hartmann-Strasse 29
D-5090 Leverkusen 1 (DE)
Erfinder : Thoma, Wilhelm, Dr.
Birkenweg 25
D-5090 Leverkusen 31 (DE)
Erfinder : Pisaric, Karl Heinz
Marderweg 86
D-5024 Pulheim (DE)
Erfinder : Bocz, Károly
Baross u. 52
H-1181 Budapest (HU)

(74) Vertreter : Müller, Gerhard, Dr. et al
BAYER AG Konzernverwaltung RP Patentabteilung
D-5090 Leverkusen 1 Bayerwerk (DE)

**Beschreibung**

Gegenstand der Erfindung sind beschichtete Verbundwerkstoffe hoher Stabilität, Flexibilität und vereinfachter Verarbeitbarkeit, vorzugsweise in schlauchförmiger Form, zum Auskleiden von Durchlässen, besonders zur Reparatur von Kanalrohrsystemen, bestehend aus einem Schichtenverbund aus einer Reaktivharz-tränkbaren, textilen Schicht und einer flexiblen, dehnbaren, Gas- und Wasser- sowie Monomer-undurchlässigen, porenfreien Schicht aus mindestens zweilagig untrennbar miteinander verbundenen, unterschiedlichen Polyurethanharnstoff-Reaktivbeschichtungsauflagen, die auf die textile Schicht aufgebracht sind. Die mindestens zweilagige PU-Beschichtung ist in ihrer, der textilen Schicht zugewandten Seite, aus einer praktisch styrolbeständigen, verzweigt aufgebauten, mäßig vernetzten, füllstoffhaltigen, nicht-thermoplastischen Polyurethanreaktivbeschichtung und darauf, in ihrer der textilen Schicht abgewandten Seite, aus einer im wesentlichen linear aufgebauten, thermoplastischen, durch Hochfrequenz, thermisch oder durch polare Lösungsmittel verschweißbaren Reaktivbeschichtung aufgebaut, wobei diese Reaktivbeschichtungslagen aus High-Solid-Systemen, bestehend aus blockierten NCO-Prepolymeren und aliphatischen und/oder cycloaliphatischen Polyaminen, im Direkt- und/oder vorzugsweise Transferbeschichtungsverfahren gebildet sind. Der mindestens zweilagige Verbund aus PU-Reaktiv-Beschichtungen kann gegebenenfalls durch weitere Haftstrichschichten (auf der textilen Seite) und gegebenenfalls weitere Deckstriche thermoplastischen Charakters, z. B. löslichen, thermoplastischen Polyurethanen, ergänzt sein.

Erfindungsgegenstand ist auch ein Verfahren zur Herstellung dieser Verbundwerkstoffe und die Verwendung dieser vorzugsweise schlauchförmigen Verbundwerkstoffe in Reaktivharz-getränkter Form zum Auskleiden von Durchlässen nach einem an sich bekannten Auskleidungsverfahren.

Zum Auskleiden von Rohren und Durchlässen mit zumeist kreisförmigem Durchschnitt, insbesondere zur Reparatur von schadhaft gewordenen Rohr- oder Kanalleitungen, werden schlauchförmige Verbundwerkstoffe verwendet. Nach dem Stand der Technik bestehen derartige Verbundwerkstoffe aus textilen Flächengebilden, die mit Reaktivharzen, z. B. styrolhaltigen Polyestergießharzen oder Epoxygießharzen, vor der Verwendung zur Auskleidung imprägniert werden, und einer gas- und flüssigkeitsundurchlässigen Kunststoff-Folie. Die Kunststoff-Folie kann aus Polyethylen, PVC oder schmelzkalandriertem Polyurethan hergestellt sein und ist gegebenenfalls mit dem textilen Substrat fest verbunden. Der Stand der Technik ist in den GB-A-1 039 836, 1 357 355, 1 423 819 und 1 449 455 sowie den DE-A-2 362 784 und der DE-C-2 240 153 beschrieben. Bei Verwendung von Polyurethanen als Kunststoff-Folie wird die Folie durch Schmelzkalandrieren erzeugt.

Der zu einem Schlauch verarbeitete, z. B. vernähte und in der Naht abgedichtete Verbundwerkstoff wird zur Reparatur von Schadstellen in die Rohre eingebracht, z. B. mit Wasser « eingeschwommen » und mit Druckluft aufgeblasen (Verfahren nach DE-C-2 240 153), oder vorzugsweise beim Einbringen in die schadhaften Rohrleitungen durch Druck « umgestülpt » (Umstülpverfahren nach DE-A-2 362 784).

Auf diese Weise kommt die zunächst innenliegende Reaktivharz-getränkte textile Schicht nach außen an die Rohrwandung. Zur Aushärtung des Reaktivharzes kann warmes Wasser in das Rohrsystem geleitet werden.

Die Verbundwerkstoffe des Standes der Technik aus textilen Substraten und Folienschichten zeigen eine Reihe von Nachteilen. So sind die Verbundwerkstoffe auf der Basis von Folien aus PVC oder Polyethylen relativ steif, relativ unelastisch, und gegebenenfalls weichmacherhaltig. Die Anpassung an z. B. schadhaft versetzte oder korrodierte Rohrleitungen wird dadurch erschwert. Auch die bereits praktizierte Verwendung von auf einem Schmelzwalzenkalander erzeugten Polyurethanfolien zeigt Nachteile. So sind die damit erzeugten Polyurethanfolien relativ hart und der Verbundwerkstoff ist nach dem « Umstülpverfahren » der DE-C-2 362 784 schwer verarbeitbar. Außerdem ist die Haftung zwischen textiler Schicht und PU-Folie oftmals unzureichend und erfordert die Aufbringung einer haftungsvermittelnden Schicht unter erheblicher Komplizierung der Verfahrenstechnik (sowohl Streichbeschichtungsverfahren als auch Schmelzkalanderverfahren müssen installiert werden). Bei Polyethylenen ist die Haftung zwischen Vlies und Folienschicht zu gering und die Abdichtbarkeit der Naht ist schwer zu erreichen ; bei PVC ist die Styrolbeständigkeit unzureichend.

Erfindungsgemäß sollen nunmehr Verbundwerkstoffe mit hoher Stabilität, Weichheit und Flexibilität, Dehnbarkeit, Monomerbeständigkeit und vereinfachter Verarbeitbarkeit bei der Verwendung zur Auskleidung von Durchlässen, vorzugsweise in schlauchförmiger Form, geschaffen werden. Dies wird dadurch erzielt, daß man auf einfachen Beschichtungsanlagen und in einfachen Reaktivbeschichtungsverfahren auf das Textil eine undurchlässige, mindestens zweilagige, untrennbar miteinander verbundene Polyurethanharnstoffbeschichtung in einem an sich bekannten Direkt- oder bevorzugt Transfer-Beschichtungsverfahren aufbringt, wobei die der textilen Schicht zugewandte Seite aus einer monomerbeständigen, vernetzten, füllstoffhaltigen, nicht-thermoplastischen Polyurethanharnstoffbeschichtung besteht, und auf ihrer der textilen Schicht abgewandten Seite aus einer im wesentlichen linear aufgebauten, thermoplastischen, durch Hochfrequenz, hochpolare· Lösungsmittel oder thermische Einwirkung verschweißbaren, im wesentlichen füllstofffreien Polyurethanharnstoffschicht aufgebaut ist. Die mindestens zwei chemisch unterschiedlichen Lagen sind nach dem High-Solid-Reaktivbeschichtungsverfahren leicht aufzubringen und sind untrennbar miteinander verbunden, wobei sie in dem mindestens zweilagigen Verbund die geforderten Eigenschaften, wie z. B. Monomerenbeständigkeit in der Textilinnenlage und

2

leichte Verschweißbarkeit oder Verklebbarkeit an der textilabgewandten Lage zeigen und in dem Verbundwerkstoff, vor allem in seiner schlauchförmigen Applikationsform, ausgezeichnete Weichheit, Flexibilität, Dehnbarkeit und günstige Verarbeitbarkeit auch im Reaktivharz-getränkten Zustand zeigen.

Gegenstand der Erfindung ist somit ein (vorzugsweise schlauchförmiger) Verbundwerkstoff hoher Stabilität, Weichheit und Flexibilität und vereinfachter Verarbeitbarkeit beim Auskleiden von Durchlässen, bestehend aus einem Schichtenverbund aus :

a) einer textilen Schicht, die mit Reaktivharz b), vorzugsweise ungesättigten Polyester/Styrol-Reaktivharzen, tränkbar ist und

c) einer gas- und wasserundurchlässigen Kunststoff-Folie, dadurch gekennzeichnet, daß als undurchlässige Schicht c) eine mindestens zweilagige, untrennbar miteinander verbundene Polyurethanharnstoff-Beschichtung auf die textile Schicht a) aufgebracht ist, die

d) in ihrer, der textilen Schicht zugewandten Seite aus einer Lage einer monomerbeständigen, verzweigten, mäßig vernetzten, 5-40 Gew.-% anorganische Füllstoffe enthaltenden, nicht-thermoplastischen Polyurethanharnstoff-Reaktivbeschichtung aus einer High-Solid-Beschichtungsmasse aus blockierten NCO-Prepolymeren mit einer Funktionalität von 2,12 bis 3,5 und aliphatischen und/oder cycloaliphatischen Diaminen in NCO/NH$_2$-Verhältnissen zwischen 1,30 : 1 und 0,95 : 1 besteht, und

e) darauf, in ihrer der textilen Schicht c) abgewandten Seite, aus einer Lage aus einer im wesentlichen linear aufgebauten, thermoplastischen, durch Hochfrequenz, thermisch oder durch polare Lösungsmittel verschweißbaren, Polyurethanharnstoff-Reaktivbeschichtung aus einem im wesentlichen linear aufgebauten, blockierten NCO-Prepolymer mit einer Funktionalität zwischen 1,95 und 2,06 und aliphatischen und/oder cycloaliphatischen Diaminen sowie gegebenenfals bis zu 25 Gew.-% an anorganischen Füllstoffen aufgebaut ist und gegebenenfalls

f) eine oder mehrere weitere Lagen aufweist, die ein verstärkendes Gewebe, Gewirke oder verfestigtes Vlies und/oder eine oder mehrere, in der Zusammensetzung von d) und e) abweichende Zusammensetzungen aufweisende Schichten als Zwischenlage, zusätzliche Haftstriche oder als Deckstriche, vorzugsweise Deckstriche auf Basis Diol-kettenverlängerter Polyurethane, darstellen, wobei die Reaktivbeschichtungslagen d) und e) durch Aufstreichen von unterschiedlich aufgebauten High-Solid-Systemen aus blockierten NCO-Prepolymeren und aliphatischen und/oder cycloaliphatischen Polyaminen im Direkt- und/oder (vorzugsweise) Transferbeschichtungsverfahren und thermische Nachbehandlung gebildet sind.

Gegenstand der Erfindung ist auch ein Verfahren zur Herstellung von Verbundwerkstoffen hoher Festigkeit, Weichheit und Flexibilität sowie leichter Verarbeitbarkeit zum Auskleiden von Durchlässen durch Herstellen eines Schichtenverbundes aus

a) einer textilen Schicht, die mit Reaktivharzen b) tränkbar ist und

c) einer gas- und wasserundurchlässigen Schicht aus Kunststoff-Folien

und gegebenenfalls Vernähen zu einem Schlauch und Abdichtung der Naht, dadurch gekennzeichnet, daß man auf die textile Schicht a) als undurchlässige Schicht c) eine mindestens zweilagige, untrennbar miteinander verbundene Polyurethanharnstoffbeschichtung nach dem Reaktivbeschichtungsverfahren mittels High-Solid-Beschichtungsmassen aus blockierten NCO-Prepolymeren und aliphatischen und/oder cycloaliphatischen Polyaminen und üblichen Zusatzstoffen im Direkt- und/oder (vorzugsweise) Transferbeschichtungsverfahren aufbringt und thermisch aushärtet, wobei

d) die der textilen Schicht zugewandte Lage d) aus einer High-Solid-Beschichtungsmasse aus blockierten NCO-Prepolymeren mit einer Funktionalität von 2,12 bis 3,5 besonders bevorzugt von 2,20 bis 3,0 und 5 bis 40 Gew.-%, vorzugsweise 10 bis 35 Gew.-%, besonders bevorzugt 15 bis 35 Gew.-%, bezogen auf Polyurethanmasse, an anorganischen Füllstoffen und aliphatischen und/oder cycloaliphatischen Polyaminen, vorzugsweise cycloaliphatischen Diaminen, ganz besonders bevorzugt alkylsubstituierten Diaminen des Dicyclohexylmethans, in NCO/NH$_2$-Verhältnissen zwischen 1,30 : 1 und 0,95 : 1, bevorzugt 1,25 : 1 bis 0,97 : 1, ganz besonders bevorzugt 1,10 : 1 bis 0,95 : 1, besteht und

e) die der textilen Schicht abgewandte Lage e) aus einer High-Solid-Beschichtungsmasse aus einem im wesentlichen linear aufgebauten blockierten NCO-Prepolymer, vorzugsweise mit einer Funktionalität zwischen 1,95 bis 2,06, und den bei d) genannten Diaminen sowie gegebenenfalls bis zu 25 Gew.-% an anorganischen Füllstoffen aufgebaut ist und gegebenenfalls

f) zwischen den Lagen d) und e) als eine oder mehrere weitere Lagen ein verstärkendes Gewebe, Gewirke oder Vlies einbringt und/oder eine oder mehrere, in der Zusammensetzung von d) und e) abweichende Zusammensetzungen aufweisende Beschichtungsstriche, als Zwischenlage, zusätzliche Haftstriche oder Deckstriche, vorzugsweise Deckstriche, auf Polyurethanbasis, aufbringt.

Weiterer Erfindungsgegenstand ist die Verwendung der solcherart aufgebauten, vorzugsweise schlauchförmigen Verbundwerkstoffe in mit Reaktivharzen getränkter Form für die Auskleidung von Durchlässen wie Abwässerkanälen, Tunnels, Pipelines und Wasserleitungen.

Die größere Weichheit und die damit verbundene Flexibilität des vorzugsweise schlauchartig verwendeten Verbundwerkstoffes, hergestellt nach dem erfindungsgemäßen Verfahren, erweist sich als besonderer Vorteil bei der Einbringung des Schlauches in die zu reparierenden Durchlässe oder Rohre. Auch sind die schlauchförmigen Verbundwerkstoffe weniger empfindlich gegen mechanische Beschädigung, da sie durch Monomere wie Styrol praktisch kaum angequollen sind und die harzgetränkten Reparaturschläuche sind auch lagerbeständig, da die Monomeren nicht entweichen. Die Herstellung des

3

schlauchförmigen Gebildes aus den bahnenförmigen Verbundwerkstoffen ist infolge der guten Verschweiß- bzw. Verklebbarkeit erheblich erleichtert und derartig verschweißte oder verklebte Schlauchgebilde sind sehr stabil.

Die textile Schicht a), die das Reaktivharz aufnimmt, stellen vorzugsweise saugfähige Vliese oder auch Gewebe oder Gewirke aus natürlichen oder synthetischen Fasern dar, welche ein $m^2$-Gewicht zwischen 100 und etwa 1 000, vorzugsweise 150 bis 500, besonders bevorzugt 175 bis 400 g aufweisen. Bevorzugt sind im wesentlichen ungebundene oder schwach gebundene, genadelte und gegebenenfalls geschrumpfte Vliese auf Basis synthetischer Fasern, vorzugsweise Polyester-, Polyamid- oder Polypropylenfasern oder ihrer Gemische oder lockere Geweben auf der Basis von synthetischen Fasern, insbesondere Polyesterfasern. Es sind auch flexible, offenporige Schaumstoffe auf einer textilen Schicht oder auch anstelle der « textilen » Schicht erfindungsgemäß einsetzbar. Die Vliese können auch mit feineren Trägergeweben zur Verfestigung der Struktur vernäht sein. Geeignet sind in diesem Zusammenhang auch Glasfasermatten.

Die Reaktivharze b) sind die bekannten Systeme auf Basis von ungesättigten Polyestern in Monomeren (wie z. B. Styrol) oder auch Systeme auf Basis von Epoxiden und Polyaminen. Sie können durch geeignete Katalysator/Cokatalysator-Systeme selbsthärtend bei Raumtemperatur (unter Beachtung einer hinreichenden Topfzeit von etwa einem oder mehreren Tagen) eingestellt werden. Man kann jedoch auch durch warmes Wasser oder Dampf wärmehärtbare Systeme verwenden.

Die gas- und wasserundurchlässige Schicht c) wird erfindungsgemäß als mindestens zweilagige, in den Lagen d) und e) unterschiedlich aufgebaute, miteinander verbundene Schicht mittels des an sich bekannten High-Solid-Polyurethan-Reaktivverfahrens auf die textile Schicht a) aufgebracht. Man verwendet dazu apparativ die üblichen Beschichtungsanlagen mit z. B. Rakelaufbringung der Beschichtungspasten und anschließendem Trocknungssystem, z. B. Trockenkanälen. Die Beschichtungen können in üblicher Weise im Direkt- oder besonders bevorzugt im Transferbeschichtungsverfahren (Umkehrbeschichtungsverfahren) durchgeführt werden. Der Auftrag jeder der Lagen d) oder e) und evtl. auch f) kann gegebenenfalls auch in mehreren Beschichtungsstrichen erfolgen, wobei die Zusammensetzung der Striche innerhalb der Grenzen der Zusammensetzung der einzelnen Lagen d), e) und f) auch variiert werden kann.

Die Reaktivbeschichtung erfolgt generell durch Umsetzung von blockierte NCO-Gruppen aufweisenden NCO-Prepolymeren und wenig flüchtigen aliphatischen und/oder cycloaliphatischen Diaminen, vorzugsweise alkylsubstituierten Dicyclohexylmethan-diaminen.

Als Blockierungsmittel für die NCO-Prepolymeren sind Phenole, Malonester, Acetessigester, Caprolactam und ähnliche Verbindungen geeignet, bevorzugt sind jedoch Alkanonoxime, ganz besonders bevorzugt das Butanonoxim.

Die NCO-Prepolymeren sind dabei Umsetzungsprodukte von höhermolekularen, zwei- bis vierwertigen, vorzugsweise zwei- bis dreiwertigen, Polyhydroxylverbindungen mit einem Molekulargewicht von 500 bis 10 000, vorzugsweise 1 000 bis 6 000, vorzugsweise die üblicherweise für die Beschichtung von mit Polyurethansystemen bekannten Ausgangsstoffe, z. B. 2- bis 4-wertige Polyether wie Polytetramethylenether, vorzugsweise aber Polyoxypropylenpolyether, die auch Polyoxyethylen-Einheiten in block-, misch- oder endständiger Form in Mengen bis 80 % aller Oxyalkyleneinheiten enthalten können, sowie unterhalb von 60 °C schmelzende Polyester, sowie die sonst üblicherweise verwendeten Polythioether, Polycarbonate, Polyacetale oder Lactonpolyester, ihre beliebigen Mischungen oder auch Mischkondensationsprodukte mit Ether-, Ester-, Amid-, Carbonat- oder Acetalgruppierungen.

Als höhermolekulare Polyhydroxylverbindungen können — insbesondere für die Schicht d) — Verbindungen, gegebenenfalls in Mischung mit unmodifizierten Polyolen, eingesetzt werden, welche hochmolekulare Polyaddukte bzw. Polykondensate oder Vinylpolymerisate in feindisperser oder auch gelöster Form enthalten. Es sind dies besonders etwa 8 bis 40 Gew.-% Polyadditionsprodukte aus Diisocyanaten und Diaminen (einschließlich Hydrazin bzw. Dihydrazid-Verbindungen) enthaltende Polyether, Polyester oder Polycarbonate. Auch etwa 8 bis 40 Gew.-% Polymerisate enthaltende (z. B. durch Pfropfpolymerisation von Acrylnitril und Styrol) Polyether, Polyester oder Polycarbonate können verwendet werden. In diesem Fall der Polyaddukte enthaltende Polyhydroxylverbindungen kann in der Schicht d) der anorganische Füllstoffgehalt reduziert, d. h. den angegebenen unteren Grenzen angenähert werden, da die Polyaddukte gleichfalls einen gewissen Füllstoffcharakter aufweisen, indem sie die Styrolquellung begrenzen.

Bei der Herstellung der NCO-Polymerisate können gegebenenfalls auch niedermolekulare Polyole mit einem Molekulargewicht von 62 bis etwa 399 mitverwendet werden, wie sie als Kettenverlängerungsmittel an sich bekannt sind. Bevorzugt sind erfindungsgemäß in diesem Zusammenhang Butandiol-1,4 oder -2,3 oder -1,3, Diethylenglykol, Di-2-hydroxyethyl-sulfid, oder Trimethylolpropan. Geeignete höher- und niedermolekulare Polyhydroxylverbindungen werden ausführlich in der DE-A-28 54 834, Seite 11 bis 26, genannt.

Als Polyisocyanate können die in DE-A-2 854 834, Seite 8 bis 11, genannten Polyisocyanate Verwendung finden, doch werden vorzugsweise aromatische Polyisocyanate eingesetzt. Erfindungsgemäß bevorzugt sind die Diphenylmethandiisocyanate in Form ihrer 4,4'-, 2,4'- und/oder 2,2'-Isomeren oder deren Mischungen, sowie die isomeren Toluylendiisocyanate und insbesondere Gemische dieser Isocyanate.

Die Auswahl geeigneter Ausgangsstoffe hinsichtlich ihrer Funktionalität erfolgt nach den für die einzelnen Lagen d) und e) noch aufzuführenden Kriterien.

Die Herstellung der NCO-Polymerisate erfolgt in an sich bekannter Weise, indem man die genannten Polyhydroxylverbindungen mit überschüssigen Diisocyanaten, vorzugsweise im NCO/OH-Verhältnis von 1,5 : 1, umsetzt. Der NCO-Gehalt der einzusetzenden (blockierten) NCO-Prepolymeren liegt zwischen etwa 1,8 und 8 %, vorzugsweise 2,0 bis 6 % und besonders bevorzugt 2,1 bis 5 Gew.-% NCO.

Die Blockierung erfolgt, indem man das NCO-Vorpolymerisat mit etwa stöchiometrischen Mengen des Blockierungsmittels, ganz besonders bevorzugt mit Butanonoxim, bis zum Verschwinden der NCO-Gruppe umsetzt.

Für die Lagen d) bzw. e) müssen bestimmte Zusammensetzungen bzw. Funktionalitäten eingehalten werden, wie dies noch eingehend erläutert wird.

Die blockierten NCO-Vorpolymerisate können zwecks Einstellung der optimalen Verarbeitungsviskosität von etwa 15 000 bis 40 000 mPa·s bei 20 °C mit bis zu 50 Gew.-%, vorzugsweise 15 Gew.-%, besonders bevorzugt mit bis zu 10 Gew.-%, bezogen auf das blockierte NCO-Vorpolymerisat, an organischen Lösungsmitteln gemischt werden. Beispielsweise können Isopropanol, Ethylenglykolmonomethylether sowie deren Essigsäureester, Methylethylketon, Cyclohexanon, Butylacetat und DMF verwendet werden.

Den Streichpasten können ferner übliche Zusätze wie Farbstoffe und Pigmente, Verdickungsmittel (z. B. Kieselsäuren), Verlaufshilfsmittel wie Silikone oder Ethergruppen-haltige Silikone oder gegebenenfalls auch Katalysatoren zugesetzt werden.

Als Vernetzerkomponente für die blockierten NCO-Vorpolymerisate dienen wenig flüchtige aliphatische und/oder cycloaliphatische Polyamine, vorzugsweise bei Raumtemperatur flüssige, (cyclo)aliphatische Diamine mit geringem Dampfdruck. Besonders bevorzugt sind Dicyclohexylmethan-diamine, besonders alkylsubstituierte Diaminodicyclohexylmethane, wie z. B. 4,4'-Diamino-3,3'-dimethyl-dicyclohexylmethan, 4,4'-Diamino-3,3'-diethyl-dicyclohexylmethan, 4,4'-Diamino-3,3'-diisopropyl-dicyclohexylmethan oder unsymmetrisch alkylsubstituierte 4,4'-Diaminodi-, -tri- oder -tetraalkylcyclohexylmethane, wie z. B. Produktgemische aus 3,5-Diethyl-3'-5'-diisopropyl-dicyclohexylmethan, 3,5-3',5'-Tetraethyl-4,4'-diaminodicyclohexylmethan und 3,5,3'-5'-Tetraisopropyl-4,4'-diaminodicyclohexylmethan entsprechend DE-A-29 20 501 oder 3,3'-Dimethyl-dodecahydro-diphenyl-4,4'-diamin. Es können auch aliphatische Diamine oder (bevorzugt anteilsweise im Fall der Schicht d)) Polyamine verwendet werden, z. B. 1,12-Diaminododecan oder 1,5,11-Triaminoundecan. Ganz besonders bevorzugt ist 4,4'-Diamino-3,3'-dimethyl-di-cyclohexylmethan. Besonders bevorzugte Reaktivbeschichtungsmassen werden in der DE-A-29 02 090 (EP-A-13 890) beschrieben.

Die Vermischung der blockierten NCO-Vorpolymerisate mit dem Polyamin-Vernetzer erfolgt im allgemeinen etwa im Verhältnis der Äquivalentgewichte dieser Komponenten, obwohl auch ein Abweichen vom stöchiometrischen Verhältnis möglich ist, so daß das Äquivalentverhältnis von blockiertem NCO zu NH$_2$ erfindungsgemäß im allgemeinen zwischen 1,30 : 1 und 0,95 : 1, bevorzugt 1,25 : 1 bis 0,97 : 1, ganz besonders bevorzugt 1,10 : 1 bis 0,98 : 1 liegt. Es können also NCO-Überschüsse verwendet werden, überschüssige Aminogruppen sind nur in engeren Grenzen tolerabel, um nicht die Eigenschaften zu verschlechtern.

Auf der Basis dieser Reaktivbeschichtungsmassen wird nun die mindestens zweilagige Schicht c) aus unterschiedlich aufgebauten Lagen d) und e) (und gegebenenfalls weiteren Lagen f)) erfindungsgemäß hergestellt.

Die der textilen Schicht zugewandte Seite wird mit einer Reaktivbeschichtungslage d) aus einer praktisch monomerbeständigen, vernetzten, nicht thermoplastischen Polyurethanharnstoffmasse beschichtet. Diese hierzu verwendete Beschichtungsmasse muß in ihrer NCO-Prepolymer-komponente oder in der Polyaminvernetzerkomponente eine Funktionalität von 2,12 bis 3,5 und besonders bevorzugt von 2,12 bis 2,8 aufweisen. Man verwendet dazu (anteilig) entweder höhermolekulare Polyole mit einer Funktionalität von mehr als 2,0, bevorzugt von mindestens 2,5, z. B. trifunktionelle oder tetrafunktionelle Polyether oder Polyester und/oder auch trifunktionelle , tetra- oder höherfunktionelle, niedermolekulare Polyole des Molekulargewichts 62 bis 399. Eine geeignete Funktionalität kann auch durch Mischung entsprechender Mengen von höhermolekularen di- und/oder höherfunktionellen und/oder niedermolekularen di- und/oder höherfunktionellen Polyolen erfolgen. Als höhermolekulare Polyole sind insbesondere Polyaddukte oder Vinylpolymerisate enthaltende höhermolekulare Polyhydroxylverbindungen geeignet.

Die geeignete Funktionalität der Beschichtungsmasse in den angegebenen Grenzen kann auch besonders einfach durch Mischung von höherfunktionellen NCO-Prepolymeren mit bifunktionellen NCO-Prepolymeren eingestellt werden, wie in den Beispielen beschrieben. Hierdurch ist es möglich, auch innerhalb der Funktionalitätsgrenze der Lage d) (bzw. e)) durch unterschiedliche Mischungsverhältnisse für einzelne, dünnere Aufstriche einen Funktionalitätsgradienten innerhalb der Lage d) (bzw. e)) einzustellen.

Eine sehr hohe Vernetzung (z. B. f' > 3,5) führt zwar ebenfalls zu guter Styrolbeständigkeit, aber schlechterem Flexverhalten der Beschichtung.

Als Polyamine werden Diamine bevorzugt, die jedoch auch (vorzugsweise untergeordnete) Anteile höherfunktioneller Polyamine enthalten können.

Es wurde gefunden, daß die Reaktivbeschichtungsmasse d) zur Erzielung einer erfindungsgemäß erwünschten, möglichst geringen Monomer-Quellung (durch z. B. Styrol) Füllstoffe enthalten muß. Die Menge der Füllstoffe beträgt dabei zwischen 5 bis 40 Gew.-%, bevorzugt 10 bis 35 Gew.-%, ganz bevorzugt 15 bis 35 Gew.-%, bezogen auf die Polyurethanbeschichtungslage d). Die Füllstoffe sind bevorzugt anorganische Füllstoffe wie Kreide, Talkum, Kaolin oder ähnliche Silikate, Silikagel sowie Schwerspat. Es können jedoch auch weitere Füllstoffe wie Glasmehl, Glasfaser, gemahlene oder geschnittene Textilfasern (0,3 bis 3 mm Schnittlänge bevorzugt) oder Kieselsäuren (Aerosil) zugesetzt werden.

Verwendet man Polyaddukt- bzw. Polymer-haltige, höhermolekulare Polyhydroxylverbindungen zum Aufbau der Schicht d), so kann der (anorganische) Füllstoffgehalt bei bereits hoher Wirksamkeit nahe der unteren Grenze der anorganischen Füllstoffzusätze liegen.

Die der textilen Schicht abgewandte Seite besteht aus einer im wesentlichen linear aufgebauten, thermoplastischen, durch Hochfrequenz, thermisch oder durch hochpolare Lösungsmittel verschweißbaren Polyurethanharnstoff-Beschichtungslage e). Diese Lage wird ebenfalls im Reaktivbeschichtungsverfahren aufgetragen, indem man Beschichtungsmassen auf der Basis von NCO-Voraddukten mit einer etwa difunktionellen Struktur (Funktionalität zwischen 1,95 bis 2,06) verwendet. Dies sind Massen auf der Basis in etwa bifunktioneller (linearer), höhermolekularer Polyether, Polyester und ähnlicher Verbindungen, gegebenenfalls unter Zusatz von niedermolekularen Diolen, Diisocyanate sowie Diamine (z. B. von der Art der bereits genannten Diamine). Die Schicht enthält in der Regel keine oder nur geringere Mengen an Füllstoffen, da gefunden wurde, daß ein zu hoher Gehalt an Füllstoffen in dieser Schicht e) die Verschweißbarkeit der Folien negativ beeinflußt. Es kann jedoch ein anorganischer Füllstoffgehalt bis etwa 25 Gew.-% eingebracht werden, was sich andererseits als vorteilhaft gegen eine Styrolquellung auf dieser Schicht herausstellt. Die Schicht kann weiterhin übliche Zusätze, z. B. Stabilisatoren oder Farbpigmente, enthalten.

Bevorzugt ist der Aufbau der Schicht c) in zweilagiger Form mit den Komponenten d) + e). Die einzelnen Lagen d) bzw. e) können dabei in jeweils einem einzelnen Beschichtungsstrich aufgetragen werden oder jeweils in mehreren, dünneren Beschichtungsstrichen, um eine möglichst porenfreie Austrocknung bzw. Abreaktion der Schichten zu gewährleisten. Werden mehrere Beschichtungsstriche für eine Lage aufgetragen, so kann auch innerhalb der anspruchsgemäßen Zusammensetzung eine gewisse Variation der Zusammensetzung — etwa bei Schicht d) eine Variation der Funktionalität oder der Menge des Füllstoffs — erfolgen.

Für besondere Zwecke können auch zwischen den Schichten d) und e) eine oder mehrere Zwischenlagen f) vorgesehen werden, die in die mehrlagige Beschichtungsschicht c) mit eingeht. So kann als Zwischenlage f) ein verstärkendes Gewebe, Gewirke oder evtl. verfestigtes Vlies verwendet werden, z. B. dünne (vorzugsweise < 100 g/m²) Polyester-, Polyamid- oder Polypropylengewebe oder -gewirke, die gegebenenfalls elastisch eingestellt sind, z. B. elastische Gewirke auf Basis von Elasthan-Filamenten und Polyester- bzw. Polyamidfilamenten.

Die Zwischenlage f) kann jedoch auch eine beliebige Polyurethanschicht darstellen, die z. B. Ein- oder Zwei-Komponenten-PU-Beschichtungsmassen oder auch Polyurethan- oder Polyurethanharnstoff-Reaktivbeschichtungsmassen mit einer von d) bzw. e) abweichenden Zusammensetzung.

Man kann gegebenenfalls auf ihrer, der textilen Seite a) abgewandten Seite der Lage e) noch weitere (Deckstrich-) Beschichtungslagen, vorzugsweise auf der Basis von löslichen, thermoplastischen Polyurethanen, aufbringen. Eine solche Deckschicht, die gegebenenfalls auch in zwei Lagen, z. B. einer Polyisocyanatvernetzer-haltigen Polyurethanschicht und einer vernetzerfreien, in DMF oder Tetrahydrofuran löslichen oder stark quellbaren Polyurethanschicht, aufgebracht werden kann, vermag eine Abdichtung der Nahtoberfläche durch Anlösen der Oberfläche oder überlappende Verklebung zu erleichtern.

Besonders für den Fall einer Umkehrbeschichtung kann auch die dem textilen Substrat zugewandte Seite d) des mindestens zweilagigen PU-Reaktivbeschichtungsverbundes d)/e) eine zusätzliche Haftstrichlage aufgebracht werden, die gleichfalls aus Polyurethan-Reaktiv-Beschichtungsmassen (ähnlich wie für die Schichten d)/e)) besteht.

Die Polyurethanharnstoffbeschichtungen (Schicht c)) werden im allgemeinen mit einer Gesamtauflage von 150 bis 1 000 g, vorzugsweise 200 bis 600 g, aufgebracht, wobei die dem Textil zugewandte Seite (auch als « Haftstrich » bezeichnet) etwa 1/6 bis 5/6 der Gesamtauflage ausmacht. Bevorzugt ist eine Auflagestärke von 100 bis 500 g/m², vorzugsweise 100 bis 400 g/m², der dem Textil zugewandten Haftschicht und eine Auflagenstärke von etwa 100 bis 500 g/m², vorzugsweise 100 bis 300 g/m² für die dem Textil agbewandte, sog. « Deckstrich »-Lage e).

Die erfindungsgemäß aufgebrachte, mindestens zweilagige (d + e) + evtl. f)) Polyurethanharnstoffschicht c) ist sowohl praktisch monomerdicht und praktisch quellbeständig gegen Monomere der Reaktivharzfüllung der Schicht a) als auch an der Außenseite des Verbundwerkstoffes verschweißbar. Dies ist für die erfindungsgemäße Anwendung eine außerordentlich wichtige Eigenschaftskombination. Außerdem ist das Transfer- und Direktbeschichtungsverfahren mit High-Solid-Polyurethansystemen auf weltweit verbreiteten Beschichtungsmaschinen in einfacher Form durchführbar. Aufwendige Maschinenkombinationen aus Extruder und Schmelzwalzenkalander und evtl. sogar zusätzliche Beschichtungsanlagen sind nicht nötig.

Das bahnenförmig hergestellte Verbundmaterial wird zur Anwendung für die Auskleidung von Durchlässen in schlauchartiger Form eingesetzt. Die Verbundwerkstoffbahn wird durch Vernähen zu einem Schlauch geformt, wobei eine Überlappung der Nähte vorzugsweise vermieden wird. Die Nähte müssen zur Erzielung der geforderten Dichtigkeit überdeckt werden, z. B. mit Abdeckungsstreifen. Die Abdeckungsstreifen werden aus solchen Materialien ausgewählt, welche mit der Schicht e) durch Hochfrequenzverschweißen, thermisches Verschweißen, Verschweißen durch Anlösen beider Schichten mittels (hoch)polaren Lösungsmitteln, wie z. B. Dimethylformamid, Dimethylacetamid, Dimethylsulfoxid und anderen, oder auch durch Verklebungsmittel (wie z. B. Klebstoffe auf Polyisocyanatbasis) untrennbar verbunden werden und ausreichende Dehnbarkeiten und Beständigkeiten aufweisen. Vorzugsweise bestehen die Abdeckungsstreifen aus Beschichtungsmassen der Lage e) oder anderen, im wesentlichen linearen Polyurethanelastomeren auf der Basis Diol-kettenverlängerter Polyurethane.

Derart nicht-überlappend vernähte, mittels Abdeckstreifen aus PU-Beschichtungsmassen e) durch polare Lösungsmittel verklebte, schlauchförmige Verbundwerkstoffe eignen sich in ihrer Weichheit und Flexibilität und Beständigkeit nach Füllung mit Reaktivharzen b) ganz besonders gut zur Verwendung als Reparaturschläuche zum Auskleiden von Durchlässen.

Die Einbringung der Reaktivharze b) in das schlauchförmige Gebilde erfolgt im allgemeinen vor der Aufbringung in die Rohre oder Leitungen. Das Reaktivharz kann dabei durch Bohrungen im Schlauch eingepumpt oder durch lange Röhren eingespritzt oder durch Vakuum eingezogen werden. Die so Reaktivharz-getränkte Schicht a) kann dadurch homogenisiert werden, daß man den Reparaturschlauch noch durch Preßwalzen führt (vgl. z. B. DE-C-2 240 153, Spalte 4/5).

### Beispiele

Vorbemerkung : Die Berechnung der Funktionalität der eingesetzten Verbindungen erfolgt mit Hilfe folgender Formeln :

I)
$$\frac{f \times 56 \times 1\,000}{OH - Zahl} = Molekulargewicht$$

(z B. zur Umrechung OH-Zahl/Molgewicht bei bekannter Funktionalität f von z. B. Polyhydroxylverbindungen)

II)
$$f' = \frac{\sum val\ A - \sum val\ B}{\sum mol\ (A + B) - \sum val\ B},$$

wobei A die Überschußkomponente darstellt (z. B. die Polyole bei der Herstellung von Hydroxypolyestern oder die Polyisocyanate bei der Herstellung von NCO-Prepolymeren).

f' ist die sich einstellende Funktionalität von gegebenenfalls verschieden funktionellen miteinander reagierenden Ausgangsstoffen im Produkt (z. B. im NCO-Prepolymer).

val sind Äquivalente (f. val Endgruppen sind in einem mol einer mehrfunktionellen Verbindung enthalten).

Bei der Errechnung der Funktionalität von NCO-Prepolymeren werden in den folgenden Beispielen die Blockierungsmittel (z. B. Butanonoxim) nicht berücksichtigt.

### Beispiel 1

1.1 Deckstrich zur Erzeugung der dem textilen Substrat abgewandten Lage (Lage e)) :

Aus 690 Teilen eines linearen Polyoxypropylenglykols der OH-Zahl 95 (Molgewicht 1179 ; 0,582 4 mol), 204 Teilen Toluylendiisocyanat-2,4/2,6 (80/20 Isomerengemisch (1,379 3 mol ; NCO/OH-Verhältnis 2,37 : 1) und 106 Teilen Butanonoxim wird ein Butanonoxim-blockiertes, difunktionelles (f' = 2) NCO-Prepolymeres mit einem (verkappten) NCO-Gehalt von 5,0 % hergestellt. 1 000 g dieses difunktionellen NCO-Prepolymeren, 7,5 g hochdisperse Kieselsäure (Aerosil® 380, Degussa), 15 g Ethylenglykolmonoethyletheracetat, 10 g Polyether-Polydimethylsiloxan-Blockpolymeres (Baysilon OS 50 ; Bayer AG-D 5090 Leverkusen) und 130 g 3,3'-Dimethyl-4,4'-diamino-dicyclohexylmethan (Stereoisomerengemisch) werden unter Rühren zur Deckstrichpaste e) vermischt (NCO/NH₂-Verhältnis 1,035 : 1).

1.2 Haftstrich zur Erzeugung der dem textilen Substrat zugewandten Lage (Lage d)) :

1.2.1 Verzweigtes NCO-Prepolymer (d/1)

380 Teile eines trifunktionellen Polyoxypropylenpolyethers der OH-Zahl 30 (Molgewicht 5600 ; 0,067 9 mol), 23,5 Teile eines difunktionellen, propoxylierten 4,4'-Dihydroxy-diphenyl-dimethylmethans der OH-Zahl 200 (Molekulargewicht 560 ; 0,042 0 mol), 35,5 Teile 4,4'-Diphenylmethan-diisocyanat (0,142 mol), 124,5 Teile Toluylendiisocyanat (80/20 2,4/2,6-Isomerengemisch (0,140 8 mol) und 26,5 Teile Butanonoxim werden zu einem blockierten NCO-Prepolymer umgesetzt und mit 10 Teilen Ethylenglykolmonoethylether zu einem streichfähigen NCO-Prepolymer (mit etwa 2,4 Gew.-% an blockierten NCO-Gruppen) verdünnt. (Feststoffgehalt 98 Gew.-% ; Funktionalität des verzweigten NCO-Prepolymeren : f' = 2,64).

### 1.2.2 Haftstrichpaste d/2 (Mischung aus d/1 und Deckstrichpaste e) (1 : 1))

500 g (0,108 0 mol) dieser verzweigten (f' = 2,64), Prepolymerpaste und 500 g (0,297 9 mol) des in Beispiel 1 zur Herstellung des Deckstrichs e) beschriebenen difunktionellen (f' = 2,0) NCO-Prepolymers, 7,5 g hochdisperse Kieselsäure (Aerosil® 380 der Degussa), 15 g Ethylenglykolmonomethyletheracetat, 10 g Polyethersilikon (Baysilon OS 50, Bayer AG) werden miteinander vermischt. Die Gesamtfunktionalität der Mischung der NCO-Prepolymeren liegt bei 2,135. Diese Mischung wird mit 99 g 3,3'-Dimethyl-4,4'-diamino-dicyclohexylmethan (NCO/NH$^2$-Verhältnis = 1,01 : 1) unter Rühren vermischt.

### 1.3 Verbund aus textilem Flächengebilde und gas- und flüssigkeitsundurchlässiger, zweilagiger Polyurethanschicht (Transfer-Verfahren) :

Auf ein glatt-mattes Trennpapier wird aus der obigen Deckstrichpaste e) bei 0,27 mm Rakelspalt eine Schicht e) gelegt, die nach der Kanalpassage bei 140/160/160 °C zu einem thermoplastischen Polyurethanfilm von ca. 150 g/m$^2$ Gewicht ausreagiert ist. Darauf rakelt man am 2. Streichwerk einer Tandembeschichtungsanlage bei 0,35 mm Rakelspalt die Haftpastenmischung d/2 (250 g/m$^2$) und kaschiert mit einem ungebundenen, geschrumpften Polyester-Nadelvlies a) von ca. 250 g/m$^2$ Gewicht. Der Haftstrich d) wird im zweiten Kanal bei 135/150/160 °C von den geringen Lösemittelmengen befreit und unter Abspaltung des Blockierungsmittels zur Reaktion gebracht. Die Fahregeschwindigkeit der Beschichtungsanlage beträgt 10 m/min.

Nach dem Abziehen des Trennpapiers kann der erhaltene Verbund aus textilem Flächengebilde und zweilagiger Polyurethanschicht (bestehend aus den zwei fest miteinander verbundenen Schichten d + e) auf der textilen Seite in bekannter Weise mit Reaktivharzen b) getränkt werden.

Die Oberfläche der Polyurethanharnstoff-Folie, die vom textilen Substrat abgewandte Seite, ist erfindungsgemäß thermisch und hochfrequenzverschweißbar und/oder nach Anlösen mit Dimethylformamid oder Dimethylacetamid unter Druck verklebbar. Die zweilagige Polyurethanharnstoffschicht ist gas- und flüssigkeitsundurchlässig, die dem Textil zugewandte Seite der Schicht, die Haftstrichseite, ist praktisch quellstabil gegen eine Reihe organischer Verbindungen, insbesondere gegen Monomere wie Styrol, welche aus dem Reaktivharz durch das Textil hindurch auf die Polyurethanharnstoffschicht einwirken.

Der erhaltene Verbundwerkstoff, nicht überlappend zum Schlauch vernäht, an der Naht mit einer dem thermoplastischen Deckstrich e) entsprechenden Folie verschweißend Deckstrich e) entsprechenden Folie verschweißend abgedichtet und mit Reaktivharz b) getränkt, ist sehr weich und flexibel und damit sehr leicht in das zu reparierende Rohr einzuführen.

### 1.4 Variiertes Verfahren :

Verwendet man als Deckstrich e) eine Paste, die zusätzlich 8 Gew.-% Kreide als Füllstoff enthält und verfährt wie oben angegeben, so wird ein Verbundwerkstoff erhalten, der auch in der Deckschicht e) gegen Monomere quellstabiler aber auch noch gut verschweißbar ist und zu einem Schlauch sich verarbeiten läßt, der sehr beständig in Reaktivharzgefüllter Form ist und sich sicher verarbeiten läßt.

### Beispiel 2

### 2.1 Deckstrich e) :

Zusammensetzung wie in Beispiel 1 beschrieben.

### 2.2 Haftstrich d) :

Es werden 500 g (0,108 mol) der in Beispiel 1 beschriebenen Haftstrichpaste (f' = 2,643), aber unter Verwendung von 10 Teilen Ethylenglykol mit Monomethyletheracetat und 500 Teile (0,297 9 mol) der difunktionellen Deckstrichpaste e) wie in Beispiel 1 beschrieben, zusammen mit 150 Teilen Talkumpulver vermischt (Gesamtfunktionalität der NCO-Prepolymeren etwa 2,14). Der NCO-Prepolymermischung werden 96 Teile 3,3'-Dimethyl-4,4'-diamino-dicyclohexylmethan (NCO/NH$_2$-Verhältnis etwa 1,04 : 1) zugemischt.

### 2.3 Verbund aus textilem Flächengebilde und zweilagiger Reaktivbeschichtung (Umkehrverfahren) :

Auf einem glatt-matten Trennpapier wird wie in Beispiel 1 ein Deckstrich von 200 g/m$^2$ erzeugt.

Darauf rakelt man am 2. Streichwerk einer 3-Strich-Beschichtungsanlage bei 0,45 mm Spalt die Haftstrichpaste (300 g/m²), läßt diese im 2. Kanal bei 135 °C vorreagieren und kaschiert vor dem 3. Kanal in einem sog. Trockenkaschierprozeß das textile Substrat, ein Nadelvlies gemäß Beispiel 1 zum. Im 3. Kanal bei 160 °C reagiert der Haftstrich endgültig zum Polyurethanharnstoff aus. Der nach dem Trockenkaschierverfahren hergestellte Verbund aus Textil und zweilagiger Folie hat vergleichbare Eigenschaften wie der in Beispiel 1 nach dem Naßkaschierverfahren hergestellte Verbundwerkstoff, ist jedoch noch etwas weicher und flexibler.

2.4 Variiertes Verfahren :

Ersetzt man im Haftstrich d) die 96 g 3,3'-Dimethyl-4,4'-diaminodicyclohexylmethan-Verbindung durch eine äquivalente Menge an 4,4'-Dicyclohexylmethan-diamin (flüssige Isomerenmischung) oder 3,3',5,5'-Tetraethyl-dicyclohexylmethan-4,4'-diamin, so werden praktisch gleichartig brauchbare Verbundwerkstoffe erhalten.

Beispiel 3

3.1 Deckstrich e) :

Aus 650 Teilen eines Ethylenglykol/Butandiol-1,4-adipats (OH-Zahl 56), 19 Teilen Hexandiol-1,6, 158 Teilen Toluylendiisocyanat (80/20 Isomerengemisch aus 2,4- und 2,6-Isomeren) und 73 Teilen Butanonoxim wird in üblicher Weise ein blockiertes, difunktionelles NCO-Prepolymeres hergestellt und mit 100 Teilen Ethylenglykolmonomethyletheracetat verdünnt. Der (blockierte) NCO-Gehalt beträgt 3,6 %. 1 000 g dieses blockierten NCO-Prepolymeren, 7,5 g hochdisperse Kieselsäure (Aerosil® der Degussa), 15 g Ethylenglykolmonomethyletheracetat, 10 g Polyethergruppen enthaltendes Polydimethylsiloxan (OS 50 ; Bayer AG) und 97,8 g 3,3'-Dimethyl-4,4'-diaminodicyclohexylmethan (NCO/NH$_2$-Verhältnis 0,99 : 1) werden unter Rühren vermischt.

3.2 Haftstrich d) :

Aus 325 Teilen eines trifunktionellen Polyoxypropylenethers der OH-Zahl 30 (Molekulargewicht 5 600 ; 0,058 4 mol), 162 Teilen eines linearen Polyoxypropylenetherglykols (OH-Zahl 112, Molekulargewicht 1 000 ; 0,162 0 mol), 235 Teile eines difunktionellen Hexandiol-1,6/2,2-Dimethylpropandiol-1,3 (65/35)-adipinsäurepolyesters der OH-Zahl 65 (Molekulargewicht 1 723 ; 0,210 0 mol), 66 Teile Toluylendiisocyanat (80/20 Isomerengemisch ; 0,379 3 mol), 96 Teile 4,4'-Diisocyanatodiphenylmethan (0,384 0 mol) und 66 Teilen Butanonoxim wird ein NCO-Prepolymer hergestellt und mit 50 Teilen Isopropanol verdünnt. Der NCO-Gehalt beträgt 3,2 %. 1 000 g dieses Butanonoxim-blockierten NCO-Prepolymers werden mit 255 g Kaolin und 81 g 3,3'-Dimethyl-4,4'-diaminodicyclohexylmethan unter Rühren vermischt. Die Funktionalität f' dieses Haftstrichs (s. Formel (II)) beträgt 2,23.

3.3 Verbund aus textilem Flächengebilde und zweilagigem Polyurethan (Umkehrverfahren/Trockenkaschierprozeß) :

Auf einem glatt-matten Trennpapier wird wie in Beispiel 1 aus der unter Beispiel 3.1 beschriebenen Deckstrichpaste e) ein thermoplastischer Deckstrich von 120 g/m² erzeugt. Darauf rakelt man am 2. Streichwerk einer 3-Strich-Beschichtungsanlage bei 0,40 mm Spalt die Haftstrichpaste, 280 g/m², läßt diese im 2. Kanal bei 135 °C vorreagieren und kaschiert vor dem 3. Kanal in einem sog. Trockenkaschierprozeß das textile Substrat, ein Polyestergewebe von 200 g/m² zu. Im 3. Heizkanal wird bei 160 °C die Vernetzungsreaktion zu Ende geführt.

Die Oberfläche der aus zwei Lagen (d + e) bestehenden Polyurethanharnstoff-Schicht c), die fest mit dem textilen Substrat a) verbunden ist, läßt sich thermisch unter Hochfrequenz mit sich selbst oder mit einer aufgelegten thermoplastischen Folie vom Deckstrichtyp e) verschweißen. Die gesamte zweilagige Folie ist gas- und flüssigkeitsundurchlässig, die dem Textil zugewandte Seite der Folie, die Haftstrichseite, ist praktisch quellbeständig gegen Styrol.

Beispiel 4

4.1 Haftstrich d) :

Die in Beispiel 3.2 als Haftstrich d) beschriebene Streichpaste wird im Direkt-Streichverfahren auf ein ca. 250 g schweres Polyesterfaservlies gerakelt (Auflage 100 g/m² Trockengewicht). Die Vernetzung erfolgt bei 135/150/160 °C, Verweilzeit im Kanal 1,5 Minuten.

4.2 Deckstrich (Schlußstrich) e) :

1 000 g der Dreckstrichpaste e) aus Beispiel 3.1 und 50 g einer 50 %igen Lösung eines Polyacrylats in Ethylacetat, 5 g eines ethergruppenhaltigen Polydimethylpolysiloxans (Baysilon OS 50 ; Bayer AG) und 95 g 3,3'-Dimethyl-4,4'-diamino-dicyclohexylmethans (NCO/OH = 1,02 : 1) werden unter Rühren vermischt.

Im Direktstreichverfahren wird diese Paste als Schlußstrich ((Deckstrich) auf das grundierte Polyestervlies gerakelt. Auflage ca. 120 g/m². Reaktionstemperatur 140/160/160 °C, Verweilzeit etwa 1,5 Minuten.

Der thermoplastische Schlußstrich is sowohl thermisch als auch hochfrequenzverschweißbar ; der vernetzte und gefüllte Grundstrich ist quellbeständig gegen Styrol.

<div align="center">Vergleichsbeispiel (V-1)</div>

V-1.1 Deckstrich e) (aber nicht thermoplastisch) :

Es wird ein NCO-Prepolymer aus 553 Teilen eines trifunktionellen Polyoxypropylenethertriols der OH-Zahl 30, 134 Teilen eines Hexandiol-1,6/2,2-Dimethylpropandiol-1,3 (65/35)-adipats (OH-Zahl 65), 2 Teilen Butandiol-1,4, 38 Teilen Toluylendiisocyanat (80/20 Isomerengemisch), 104 Teilen 4,4'-Diisocyanato-diphenylmethan und 69 Teilen Butanonoxim hergestellt und mit 100 Teilen Ethylenglykolmonomethyletheracetat verdünnt. 1 000 Teile des so hergestellten blockierten NCO-Polymeren (3,3 % NCO), 7,5 g hochdisperse Kieselsäure (Aerosil 380 von Degussa), 15 g Ethylenglykolmonomethyletheracetat, 10 g Ethergruppen-haltiges Polydimethylsiloxan (Baysilon OS 50 ; Bayer AG) und 98 g 3,3'-Dimethyl-4,4'-diamino-di-cyclohexylmethan werden unter Rühren vermischt.

V-2 Haftstrich d) (thermoplastisch, ohne anorganischen Füllstoff) :

Aus 828 Teilen eines linearen Oxypropylenetherdiols der OH-Zahl 56, 122 Teilen Toluylendiisocyanat (80/20 Isomerengemisch) und 50 Teilen Butanonoxim wird ein NCO-Prepolymer mit einem NCO-Gehalt von 2,4 % hergestellt. 1 000 g dieses Prepolymers, 15 g Ethylenglykolmonomethyletheracetat, 10 g Ethylgruppenhaltiges Polydimethylsiloxan (Baysilon OS 50 , Bayer AG) und 68 g 3,3'-Dimethyl-4,4'-diamino-dicyclohexylmethan werden unter Rühren vermischt.

V-3 Verbund aus textilem Flächengebilde und zweilagigem Polyurethan :

Auf ein glatt-mattes Trennpapier wird mittels der Vergleichsdeckstrichpaste bei 0,30 mm Rakelspalt eine Schicht gelegt, die nach der Kanalpassage bei 140/160/160 °C zu einem nicht-thermoplastischen Polyurethanfilm von ca. 150 g/m² ausreagiert ist. Darauf rakelt man am 2. Streichwerk einer Tandem-Beschichtungsanlage bei 0,35 mm Rakelspalt die nicht gefüllte Vergleichshaftstrichpaste, Auflage 250 g/m² und kaschiert mit einem ungebundenen, gestumpften Polyesternadelvlies von ca. 250 g/m² Gewicht. Der Haftstrich wird im 2. Kanal bei 140/150/160 °C von den geringen Lösemittelmengen befreit und zur Reaktion gebracht.

Der nach dem Abziehen des Trennpapiers erhaltene Verbund aus Textil und zweilagiger Polyurethanreaktivschicht ist auf der textilabgewandten Seite nicht thermoplastisch, d. h. weder thermisch verschweißbar noch praktikabel HF-verschweißbar und auch nur unzureichend verklebbar. Die dem Textil zugewandte Haftstrichseite, thermoplastisch und nicht gefüllt, quillt sehr stark unter der Einwirkung von Styrol und führt zu einer krumpeligen Oberfläche des Schlauchs mit beginnender Ablösung der verschiedenen Lagen.

<div align="center">Beispiel 5</div>

5.1.1 Deckstrichlagen e)

Auf ein glatt-mattes Trennpapier wird die Deckstrichpaste e) nach Beispiel 1.1 mittels Rakelauftrag in einer Schichtstärke von 60 g/m² (Trokkenfilm) aufgetragen und nach einer Kanalpassage bei 140/160/160 °C aufgetrocknet und ausreagiert.

5.1.2.2 Strich der Deckstrichlage e)

Auf diesen ersten Deckstrich wird mit der obigen Deckstrichpaste, die jedoch zusätzlich 10 Gew.-% Kreide als Füllstoff enthält, ein zweiter Strich mit einer Stärke von 65 g/m² aufgetragen und im Kanal wie oben ausreagiert.

5.2.1 Haftstrichlagen d)

Auf die in zwei Strichen aufgetragene Deckstrichlage e) mit einer Gesamtstärke von 125 g/m² wird die Haftstrichpastenmischung d/2 (nach Beispiel 1.2.2) in einer Stärke von 60 g/m² (Trockengewicht) aufgebracht und wie oben durch Kanalpassagen ausreagiert.

5.2.2.2 Haftstrich variierter Zusammensetzung

<div align="center">10</div>

Auf die bisherigen Striche wird in einer weiteren Passage eine stärker vernetzende Haftstrichpaste in einer Schichtstärke von etwa 90 g/m² aufgetrocknet und wie üblich im Trockenkanal ausreagiert. Die stärker vernetzende Haftstrichpaste wurde hergestellt aus 700 g des verzweigten Haftstrich NCO-Prepolymers d/1 (nach Beispiel 1.2.1), 300 g des linearen Deckstrich NCO-Prepolymers (nach Beispiel 1.1), 7,5 g einer hochdispersen Kieselsäure (Aerosil® 380 der Firma Degussa), 20 g Ethylenglykolmonomethyletheracetat und 12 g Polyetherpolydimethylsiloxan (Baysilon OS 50 ; Bayer AG), 200 g Kreide und 82,13 g 3,3'-Dimethyl-4,4'-dicyclohexylmethan.

### 5.2.3.3 Haftstrich

Auf die bereits 4 Striche enthaltende, zweilagige Beschichtung wird bei etwa 0,35 mm Rakelspalt die Haftpastenmischung d/2 (Beispiel 1.2.2) aufgetragen, ca. 200 g/m², und mit einem ungebundenen, geschrumpften Polyesternadelvlies von ca. 270 g/m² Gewicht zusammenkaschiert und in einem Trockenkanal bei 135/155/165 °C (10 m/min Bandgeschwindigkeit) von den geringen Lösemittelanteilen befreit und unter Abspaltung des Blockierungsmittels zur Reaktion gebracht. Es entsteht eine völlig homogene, porenfreie, zweilagige Beschichtung, die mit dem Vlies fest, jedoch zu einem weichen und flexiblen Verbundstoff, kombiniert ist. Der Verbundwerkstoff zeigt (nach Abziehen des Trennpapiers) eine ausgezeichnete Beständigkeit gegen das Styrol des Reaktivharzes selbst bei einwöchiger Lagerung bei 40 °C.

### Beispiel 6

Quellungsteste in flüssigem Styrol in Abhängigkeit von Füllstoffen und deren Menge

Es werden Verbundwerkstoffe wie in Beispiel 1 aus Deckstrich 1.1 und Haftstrichmischung 1.2.2 und einem textilen Verbund nach 1.3 hergestellt, doch wird anstelle der angegebenen Kreidemenge der Haftstrichpaste die in der Tabelle angegebene Menge an anorganischen Füllstoffen (in Gew.-%, bezogen auf abreagierte Polyurethanharnstoffbeschichtung incl. Füllstoff) eingesetzt.

Die Verbundwerkstoffe werden bei 20 bis 22 °C (Raumtemperatur) in Streifen von 5 × 12 cm in Styrol eingelegt und auf ihr Verhalten nach unterschiedlicher Zeit geprüft.

### Beispiel 7

Umkehrverfahren auf Trennpapier mit Einkaschieren des Textils in die flüssige Haftschicht

### 7.1 Zusätzliche Deckschichten f)

7.1.1 Eine 25 %ige Lösung eines Diol-kettenverlängerten Polyurethans auf Basis eines Adipinsäure-Butandiol-1,4-Polyesters (Molekulargewicht 2250), Diphenylmethan-4,4'-diisocyanat und Butandiol-1,4 (Molverhältnisse 1 : 5 : 4) in einem Dimethylformamid/Toluol (1 : 1)-Gemisch wird in einer Menge von 160 g/m² Lösung auf ein Trennpapier aufgerakelt und bei 80/90/110 °C im Trockenkanal zu einer Feststoffauflage von 40 g/m² aufgetrocknet.

7.1.2 Eine 25 %ige Lösung des Polyurethans nach 7.1.1 wird mit 6 Gew.-% (bezogen auf Feststoff) eines Triisocyanats (Umsetzungsprodukt eines aliphatischen Trialkohols mit überschüssigem Toluylen-2,4-diisocyanat) versetzt und wie unter 7.1.1 die Schicht aufgetragen und getrocknet. Feststoffauflage 40 g/m².

### 7.2 Deckschicht e) auf High-Solid-Reaktiv-Basis

Es wird die Deckstrichpaste e) nach Beispiel 1.1 auf die bisherigen Schichten 7.1.1 und 7.1.2 aufgerakelt. Die Trocknung und Reaktion der High-Solid-Reaktivschicht 7.2 erfolgt bei 130/150/170 °C in üblicher Weise im Trockenkanal. Die Feststoffauflage 7.2 beträgt etwa 100 g/m².

### 7.3 Haftstriche d)

### 7.3.1 Haftstrich-Teilschicht d)/1

50 Teile des verzweigten High-Solid-NCO-Prepolymers d)/1 aus Beispiel 1.2.1 und 50 Teile des linear aufgebauten High-Solid-NCO-Prepolymers aus der Deckstrichpaste e) des Beispiels 1.1 werden mit 10 Teilen Omya-Kreide BSH, 1 Teil Polyethersilikon (s. Beispiel 1) und 9,6 Teilen 3,3'-Dimethyl-4,4'-diamino-dicyclohexylmethan zur Haftstrichpaste vermischt und diese auf die bisherigen Schichten in solcher Menge aufgerakelt, daß sich eine Feststoffauflage 7.3.1 nach Trocknen bei 130/145/160 °C von 100 g/m² ergibt.

### 7.3.2 Haftstrich-Teilschicht d)/2

100 Teile des verzweigt aufgebauten High-Solid-NCO-Prepolymers d)/1 aus der Deckschicht e) werden mit 3 Teilen hochdisperser Kieselsäure (Aerosil® 300 ; Firma Degussa, Frankfurt), 1 Teil des Polyethersilikons aus Beispiel 1 und 6,2 Teilen 3,3'-Dimethyl-4,4'-diamino-dicyclohexylmethan (flüssiges Stereoisomerengemisch) unter Rühren vermischt und auf die bisherigen Schichten aufgetragen.

In den flüssigen Haftstrich 7.3.2 wird das textile Substrat (wie in Beispiel 1) zukaschiert, leicht eingedrückt und bei 140/160/160 °C im Trockenkanal getrocknet und unter Vernetzung ausreagiert. Die Feststoffauflage der Schicht 7.3.2 beträgt etwa 170 g/m².

Es wird eine hochflexible Beschichtung (Feststoffauflage etwa 450 g/m²) erhalten, welche porenfrei und gegenüber dem Tränkharzlösungsmittel Styrol dicht und ausreichend quellbeständig ist. Nach dem Abziehen des Trennpapiers kann das Material an der Deckschicht f) mittels Dimethylformamid und/oder Tetrahydrofuran an der Schlauchnaht unter hervorragender Abdichtung unter Zuhilfenahme von Folien auf Basis Diol-kettenverlängerter, thermoplastischer Einkomponentenpolyurethane verklebt werden.

# Tabelle

Füllstoffmenge (in der "Haftschicht" d)

| | 0 | | 5 | 10 | 15 | 20 | 30 | 40 |
|---|---|---|---|---|---|---|---|---|
| | | | | | (in Gew.-%) | | | |

Kreide (Mistron-OMYA-BSH; Fa. OMYA-Belgien)

| 1h | starke Quellung unter Ab-lösung | | starke Quellung | mäßige Quellung | noch mäßig schwache Quellung | schwache Quellung | sehr schwache Quellung | |
| 3h | vom Vlies | | Beschich-tung "krumpelig" | Beschich-tung etwas "krumpelig" | schwach "krumpelige" Oberfläche | Beschich-tungsober-fläche we-nig verändert | Beschichtungsoberfläche praktisch unverändert glatt | |

Wiederholt man den Versuch mit 10 Gew.-% Kreide sowohl in der Haftschicht als auch in der Deckschicht e), so wird eine erkennbare Quellung nach einer Stunde und nur eine sehr schwach krumpelige Oberfläche nach 3 Stunden beobachtet.

Praktisch gleichartig wirken Füllstoffzusätze von z. B. Talkum oder Kaolin in den angegebenen Mengen.

0 100 029

**Patentansprüche**

1. Beschichteter Verbundwerkstoff hoher Stabilität, Flexibilität und vereinfachter Verarbeitbarkeit zum Auskleiden von Durchlässen, bestehend aus einem Schichtenverbund aus

a) einer Reaktivharz-aufnehmenden textilen Schicht, die mit Reaktivharz b) tränkbar ist und

c) einer gas- und wasserundurchlässigen Schicht aus Kunststoff-Folien,

dadurch gekennzeichnet, daß als undurchlässige Schicht c) eine mindestens zweilagige, untrennbar miteinander verbundene Polyurethanharnstoff-Reaktivbeschichtung auf die textile Schicht a) aufgebracht ist, die

d) in ihrer, der textilen Schicht zugewandten Seite, aus einer Lage einer monomerbeständigen, verzweigten, mäßig vernetzten, nicht-thermoplastischen, 5-40 Gew.-% bezogen auf Polyurethanmasse anorganische Füllstoffe enthaltenden Polyurethanharnstoff-Reaktivbeschichtung aus einer High-Solid-Beschichtungsmasse aus blockierten NCO-Prepolymeren mit einer Funktionalität von 2,12 bis 3,5 und aliphatischen und/oder cycloaliphatischen Diaminen in NCO/NH$_2$-Verhältnissen zwischen 1,30 : 1 und 0,95 : 1 besteht und

e) darauf, in ihrer, der textilen Schicht abgewandten Seite, aus einer Lage einer im wesentlichen linear aufgebauten thermoplastischen, durch Hochfrequenz, thermische oder durch Einwirkung hochpolarer Lösungsmittel verschweißbaren, Polyurethanharnstoff-Reaktivbeschichtung aus einem im wesentlichen linear aufgebauten, blockierten NCO-Prepolymer mit einer Funktionalität zwischen 1,95 und 2,06 und aliphatischen und/oder cycloaliphatischen Diaminen, sowie gegebenenfalls bis 25 Gew.-% an anorganischen Füllstoffen, aufgebaut ist und gegebenenfalls

f) eine oder mehrere weitere Lagen aufweist, die ein verstärkendes Gewebe, Gewirke oder verfestigtes Vlies und/oder eine oder mehrere, in der Zusammensetzung von d) und e) abweichende Zusammensetzungen aufweisende Schichten als Zwischenlagen, zusätzliche Haftstriche oder Deckstriche darstellen,

wobei die Reaktivbeschichtungslagen d) und e) durch Aufstreichen von unterschiedlich aufgebauten High-Solid-Systemen aus blockierten NCO-Prepolymeren und aliphatischen und/oder cycloaliphatischen Polyaminen im Direkt- und/oder Transferbeschichtungsverfahren und anschließende thermische Nachbehandlung gebildet sind.

2. Verbundwerkstoff nach Anspruch 1, dadurch gekennzeichnet, daß die der textilen Schicht a) zugewandte Lage des Polyurethanharnstoffs d) aus mindestens einer 2,12- bis 2,8-funktionellen NCO-Prepolymer- oder Polyamin-Reaktivkomponente hergestellt ist.

3. Verbundwerkstoff nach Ansprüchen 1 bis 3, dadurch gekennzeichnet, daß die monomerbeständige, verzweigt aufgebaute, mäßig vernetzte, füllstoffhaltige, nicht-thermoplastische Polyurethanharnstofflage d) 8 bis 25 Gew.-% Kreide und/oder Talkum und/oder Kaolin enthält.

4. Verbundwerkstoff nach Ansprüchen 1 bis 4, dadurch gekennzeichnet, daß die im wesentlichen linear aufgebaute, thermoplastische, der textilen Schicht abgewandte Lage e) der Polyurethanharnstoffe aus im wesentlichen linearen Reaktionskomponenten hergestellt werden.

5. Verbundwerkstoff nach Ansprüchen 1 bis 5, dadurch gekennzeichnet, daß die mindestens zweilagige Polyurethanharnstoffschicht c) insgesamt aus einer Auflage von 200 bis 600 g/m$^2$ besteht.

6. Verbundwerkstoff nach Ansprüchen 1 bis 6, dadurch gekennzeichnet, daß die mindestens zweilagige Polyurethanharnstoffschicht c) aus 100 bis 500 g/m$^2$ d) und 100 bis 200 g/m$^2$ e) besteht.

7. Verbundwerkstoffe nach Ansprüchen 1 bis 7, dadurch gekennzeichnet, daß man mit Butanonoxim blockierte NCO-Prepolymere aus höhermolekularen Polyethern und/oder Polyestern und gegebenenfalls niedermolekularen Diolen und Diphenylmethan-4,4'-diisocyanat und/oder Toluylendiisocyanaten verwendet und mit gegebenenfalls alkylsubstituierten Dicyclohexymethan-diaminen umsetzt.

8. Verfahren zur Herstellung von Verbundwerkstoffen nach Ansprüchen 1 bis 8, durch Herstellen eines Schichtenverbundes aus

a) einer textilen Schicht, die mit Reaktivharzen b) tränkbar ist und

c) einer gas- und wasserundurchlässigen Schicht aus Kunstoff-Folien

und gegebenenfalls Vernähen zu einem Schlauch und Abdichtung der Naht, dadurch gekennzeichnet, daß man auf die textile Schicht a) als undurchlässige Schicht c) eine mindestens zweilagige, untrennbar miteinander verbundene Polyurethanharnstoffbeschichtung nach dem Reaktivbeschichtungsverfahren mittels High-Solid-Beschichtungsmassen aus blockierten NCO-Prepolymeren und aliphatischen und/oder cycloaliphatischen Polyaminen und üblichen Zusatzstoffen im Direkt- und/oder Transferbeschichtungsverfahren aufbringt und thermisch aushärtet, wobei

d) die der textilen Schicht zugewandte Lage d) aus einer High-Solid-Beschichtungsmasse aus blockierten NCO-Prepolymeren mit einer Funktionalität von 2,12 bis 3,5, besonders bevorzugt von 2,20 bis 3,0 und 5 bis 40 Gew.-%, bezogen auf Polyurethanmasse, an anorganischen Füllstoffen und aliphatischen und/oder cycloaliphatischen Polyaminen, in NCO/NH$_2$-Verhältnissen zwischen 1,30 : 1 und 0,95 : 1, besteht und

e) die der textilen Schicht abgewandte Lage e) aus einer High-Solid-Beschichtungsmasse aus einem im wesentlichen linear aufgebauten, blockierten NCO-Prepolymer, vorzugsweise mit einer Funktionalität zwischen 1,95 bis 2,06, und den bei d) genannten Diaminen sowie gegebenenfalls bis 25 Gew.-% an anorganischen Füllstoffen aufgebaut ist und gegebenenfalls

f) zwischen den Lagen d) und e) als eine oder mehrere weitere Lagen ein verstärkendes Gewebe, Gewirke oder Vlies einbringt und/oder eine oder mehrere, in der Zusammensetzung von d) und e) abweichende Zusammensetzungen aufweisende Beschichtungsstriche als Zwischenstriche, zusätzliche Haft- oder Deckstriche auf Polyurethanbasis aufbringt.

9. Verwendung der Verbundwerkstoffe nach Ansprüchen 1 bis 8 in Schlauchform und in mit Reaktivharzen getränkter Form zur Auskleidung und Reparatur von Durchlässen.

**Claims**

1. Coated composite material or high stability, flexibility and simplified processibility for lining passages, consisting of a bonded laminate of
    a) a reactive-resin-receiving textile layer which can be impregnated with reactive resin b) and
    c) a gas- and water-impermeable layer of plastic films,
characterised in that a polyurethane urea reactive coating comprising at least two layers which are joined together undetachably is applied as the impermeable layer c) to the textile layer a), which coating consists
    d) in its side facing the textile layer, of a layer of a monomer-resistant, branched, moderately cross-linked, non-thermoplastic polyurethane urea reactive coating which contains 5-40 % by weight, based on the polyurethane composition, of inorganic fillers and consists of a high-solid coating composition of blocked NCO prepolymers having a functionality of 2.12 to 3.5 and aliphatic and/or cycloaliphatic diamines in NCO/NH$_2$ ratios of between 1.30 : 1 and 0.95 : 1, and
    e) thereupon, in its side remote from the textile layer, consists of a layer of a substantially linear, thermoplastic polyurethane urea reactive coating which can be welded by high-frequency, by heat or by the effect of highly-polar solvents and which consists of a substantially linear, blocked NCO prepolymere having a functionality between 1.95 and 2.06 and aliphatic and/or cycloaliphatic diamines, and optionally up to 25 % by weight of inorganic fillers, and optionally has
    f) one or more other layers which are a reinforcing woven cloth, knitted cloth or strengthened non-woven cloth, and/or one or more layers having compositions differing in the composition of d) and e), as intermediate layers, additional adhesive coats or cover coats,
the reactive coating layers d) and e) being formed by coating on differently composed high-solid systems of blocked NCO prepolymers and aliphatic and/or cycloaliphatic polyamines in the direct and/or transfer coating process and by subsequent thermal after-treatment.

2. Composite material according to Claim 1, characterised in that the layer of the polyurethane urea d) facing the textile layer a) is produced from at least one 2.12- to 2.8-functional NCO prepolymer or polyamine reactive component.

3. Composite material according to Claims 1 to 3, characterised in that the monomer-resistant, branched, moderately cross-linked, filler-containing, non-thermoplastic polyurethane urea layer d) contains 8 to 25 % by weight of chalk and/or talcum and/or kaolin.

4. Composite material according to Claims 1 to 4, characterised in that the substantially linear, thermoplastic layer e) of polyurethane ureas remote from the textile layer is produced from substantially linear reaction components.

5. Composite material according to Claims 1 to 5, characterised in that the at least two-layered polyurethane urea layer c) consists altogether of an applied layer of 200 to 600 g/m$^2$.

6. Composite material according to Claims 1 to 6, characterised in that the at least two-layered polyurethane urea layer c) consists of 100 to 500 g/m$^2$ of d) and 100 to 200 g/m$^2$ of e).

7. Composite materials according to Claims 1 to 7, characterised in that butanone-oxime-blocked NCO prepolymers of relatively high molecular weight polyethers and/or polyesters and optionally low molecular weight diols and diphenylmethane-4,4'-diisocyanate and/or toluylene diisocyanates are used and reacted with optionally alkyl-substituted dicyclohexylmethane diamines.

8. Process for the production of composite materials according to Claims 1 to 8, by producing a bonded laminate of
    a) a textile layer which can be impregnated with reactive resins b) and
    c) a gas- and water-impermeable layer of plastic films and optionally sewing the material to form a tube and sealing the seam,
characterised in that a polyurethane urea coating consisting of a least two layers which are joined together undetachably is applied as the impermeable layer c) to the textile layer layer a) by the reactive coating process using high-solid coating compositions of blocked NCO prepolymers and aliphatic and/or cycloaliphatic polyamines and conventional additives in the direct and/or transfer coating process, and is thermally hardened, wherein
    d) the layer d) facing the textile layer consists of a high-solid coating composition of blocked NCO prepolymers having a functionality of 2.12 to 3.5, particularly preferably of 2.20 to 3.0, and 5 to 40 % by weight, based on the polyurethane composition, of inorganic fillers and aliphatic and/or cycloaliphatic polyamines, in NCO/NH$_2$ ratios between 1.30 : 1 and 0.95 : 1, and
    e) the layer e) remote from the textile layer is composed of a high-solid coating composition of a substantially linear, blocked NCO prepolymer, preferably having a functionality between 1.95 to 2.06, and the diamines mentioned under d) and optionally up to 25 % by weight of inorganic fillers, and optionally

f) a reinforcing woven cloth, knitted cloth or non-woven cloth is introduced between the layers d) and e) as one or more other layers and/or one or more coats having compositions differing in the composition of d) and e) and based on polyurethane are applied as intermediate coats, additional adhesive layers or cover coats.

9. Use of the composite materials according to Claims 1 to 8 in tubular form and in a form impregnated with reactive resins for lining and repairing passages.

**Revendications**

1. Matériau composite enduit, de grande stabilité et de mise en œuvre simplifiée pour le revêtement de passages, composé d'un ensemble de couches formé

a) d'une couche textile absorbant une résine réactive, qui peut être imprégnée de résine réactive b) et

c) d'une couche imperméable au gaz et à l'eau, formée de feuilles de matière plastique, caractérisé en ce qu'on applique comme couche imperméable c) sur la couche textile a) un revêtement réactif de polyuréthane-urée formé d'au moins deux couches, liées ensemble de façon inséparable, qui

d) est constitué sur son côté tourné vers la couche textile par une couche d'un revêtement réactif de polyuréthanne-urée non thermoplastique, moyennement réticulé, ramifié, stable aux monomères, comportant 5 à 40 % en poids, par rapport à la matière formée de polyuréthanne, de charges inorganiques, constitué par une couche de revêtement à forte teneur en matières solides en prépolymères à groupes NCO bloqués ayant une fonctionnalité de 2,12 à 3,5 et des diamines aliphatiques et/ou cycloaliphatiques dans des rapports NCO/NH$_2$ de 1,30 : 1 à 0,95 : 1, et constitué

e) par-dessus ce revêtement, sur son côté opposé à la couche textile, par une couche d'un revêtement réactif de polyuréthanne-urée thermoplastique, à structure principalement linéaire, pouvant être soudé par haute fréquence, par la chaleur ou par l'action de solvants fortement polaires, formé d'un prépolymère à groupes NCO bloqués, à structure principalement linéaire, à fonctionnalité comprise entre 1,95 et 2,06 et des diamines aliphatiques et/ou cycloaliphatiques, ainsi que, le cas échéant jusqu'à 25 % en poids de charges inorganiques, et présente le cas échéant

f) une ou plusieurs autres couches qui constituent un tissu de renforcement, un tricot ou un voile renforcé et/ou une ou plusieurs couches présentant des compositions s'écartant de celle de d) et e) comme couches intermédiaires, enduits adhésifs ou enduits de revêtement additionnels, les couches de revêtement réactif d) et e) étant formées par application de systèmes à forte teneur en matières solides, différemment constitués, de prépolymères à groupes NCO bloqués et de polyamines aliphatiques et/ou cycloaliphatiques par le procédé d'enduction directe et/ou par transfert, puis traitement thermique de finissage.

2. Matériau composite suivant la revendication 1, caractérisé en ce que la couche de polyuréthanne-urée d) tournée vers la couche textile a) est produite à partir d'au moins un composant réactif polyaminé ou prépolymère à groupes NCO à fonctionnalité allant de 2,12 à 2,8.

3. Matériau composite suivant les revendications 1 à 3, caractérisé en ce que la couche de polyuréthanne-urée d) non thermoplastique contenant une charge, moyennement réticulée, à structure ramifiée, stable aux monomères, contient 8 à 25 % en poids de craie et/ou de talc et/ou de kaolin.

4. Matériau composite suivant les revendications 1 à 4, caractérisé en ce que la couche e) des polyuréthanne-urées thermoplastique, opposée à la couche textile, à structure principalement linéaire, est produite à partir de composants réactionnels principalement linéaires.

5. Matériau composite suivant les revendications 1 à 5, caractérisé en ce que la couche de polyuréthanne-urée c) formée d'au moins deux strates est constituée par un revêtement de 200 à 600 g/m$^2$.

6. Matériau composite suivant les revendications 1 à 6, caractérisé en ce que la couche de polyuréthanne-urée c) formée d'au moins deux strates est constituée par 100 à 500 g/m$^2$ de d) et 100 à 200 g/m$^2$ de e).

7. Matériaux composites suivant les revendications 1 à 7, caractérisés en ce qu'on utilise des prépolymères à groupes NCO bloqués à la butanone-oxime, formés de polyéthers et/ou de polyesters de poids moléculaire élevé et, le cas échéant de diols de bas poids moléculaire et de 4,4'-diisocyanatodiphé-nylméthane et/ou de diisocyanatotoluène et on les fait réagir avec des dicyclohexylméthanediamines portant éventuellement des substituants alkyle.

8. Procédé de production de matériaux composites suivant les revendications 1 à 8, par l'établissement d'un ensemble de couches formé

a) d'une couche textile qui peut être imprégnée de résines réactives b) et

c) d'une couche imperméable aux gaz et à l'eau formée de feuilles de matière plastique et, le cas échéant réunion par couture en un corps tubulaire et étanchéification de la couture, caractérisé en ce qu'on applique et on fait durcir thermiquement sur la couche textile a) comme couche imperméable c) un revêtement de polyuréthanne-urée formé d'au moins deux couches liées ensemble de façon séparable, par le procédé d'enduction réactive au moyen de mélanges d'enduction à forte teneur en matières solides formés de prépolymères à groupes NCO bloqués et de polyamines aliphatiques et/ou cycloaliphatiques et d'additifs classiques, par le procédé d'enduction directe et/ou d'enduction par transfert,

d) la couche d) tournée vers la couche textile est constituée par un mélange d'enduction à forte teneur en matières solides formé de prépolymères à groupes NCO bloqués ayant une fonctionnalité de 2,12 à 3,5, notamment de 2,20 à 3,0, et de 5 à 40 % en poids, par rapport à la masse de polyuréthanne, de charges inorganiques et de polyamines aliphatiques et/ou cycloaliphatiques dans des rapports NCO/NH$_2$ compris entre 1,30 : 1 et 0,95 : 1, et

e) la couche e) opposée à la couche textile est établie à partir d'un mélange d'enduction à forte teneur en matières solides formé d'un prépolymère à groupes NCO bloqués, à structure principalement linéaire, ayant de préférence une fonctionnalité comprise entre 1,95 et 2,06, et des diamines indiquées en d) ainsi que, le cas échéant, d'une proportion allant jusqu'à 25 % en poids de charges inorganiques, et, le cas échéant

f) on insère entre les couches d) et e) en une ou plusieurs autres couches un tissu, un tricot ou un voile de renforcement et/ou une ou plusieurs couches d'enduction dont les compositions s'écartent de celle de d) et de e) sont appliquées comme couches intermédiaires, couches adhésives ou couches de revêtement additionnelles à base de polyuréthanne.

9. Utilisation des matériaux composites suivant les revendications 1 à 8 sous la forme tubulaire et sous la forme imprégnée de résines réactives pour le revêtement et la réparation de passages.